**Europäisches Patentamt**

**European Patent Office**

**Office européen des brevets**

(19)

(11) Veröffentlichungsnummer: **0 225 590 B1**

(12) **EUROPÄISCHE PATENTSCHRIFT**

(45) Veröffentlichungstag der Patentschrift: **16.06.93**

(51) Int. Cl.⁵: **G01N 21/21**, G01B 11/06, G01N 21/89

(21) Anmeldenummer: **86116769.0**

(22) Anmeldetag: **02.12.86**

(54) **Verfahren und Vorrichtung zur Bestimmung von Dicken- und/oder Orientierungsänderungen innerhalb einer optisch aktiven Materialbahn.**

(30) Priorität: **11.12.85 DE 3543632**

(43) Veröffentlichungstag der Anmeldung:
**16.06.87 Patentblatt 87/25**

(45) Bekanntmachung des Hinweises auf die Patenterteilung:
**16.06.93 Patentblatt 93/24**

(84) Benannte Vertragsstaaten:
**DE FR GB LU NL**

(56) Entgegenhaltungen:
**DE-A- 2 151 529**
**DE-A- 2 338 305**
**DE-A- 3 106 818**
**DE-A- 3 435 059**
**US-A- 1 874 217**

**PATENT ABSTRACTS OF JAPAN, Band 4, Nr. 156 (P-34)[638], 31. Oktober 1980, Seite 82 P 34; & JP-A-55 104 743**

(73) Patentinhaber: **HOECHST AKTIENGESELL-SCHAFT**
**Postfach 80 03 20**
**W-6230 Frankturt am Main 80(DE)**

(72) Erfinder: **Gawrisch, Wolfgang, Dr. Dipl.-Phys.**
**Am Dalberger 10**
**W-6501 Gau-Bischofsheim(DE)**
Erfinder: **Trzèbiatowski, Thomas, Dr. Dipl.-Phys.**
**Hessenring 34**
**W-6200 Wiesbaden(DE)**

# Beschreibung

Die Erfindung betrifft ein Verfahren zur optischen Fehlerüberwachung einer optisch aktiven, transparenten Materialbahn, bei dem die Intensität von Licht nach dem Durchstrahlen der zwischen gekreuzten Polarisatoren hindurchbewegten Materialbahn gemessen wird, sowie eine Vorrichtung zur optischen Fehlerüberwachung.

Ein derartiges Verfahren und eine derartige Vorrichtung sind aus der DE-A 21 51 529 bekannt, gemäß der vorgesehen ist, daß eine zu untersuchende Materialbahn mit polarisiertem Licht beaufschlagt wird und das durch die Materialbahn hindurchtretende Licht durch einen Analysator zu einer Beobachtungseinrichtung gelenkt wird. Es wird linear polarisiertes Licht verwendet, und der Analysator ist in bezug auf das polarisierte Licht gekreuzt, was bedeutet, daß die Folie an den fehlerfreien Stellen im allgemeinen hell oder bunt erscheint, während am Ort eines Loches oder eines Risses in der Materialbahn ein schwarzer Punkt erscheint. Die Beobachtungseinrichtung ist beispielsweise ein Fotoempfänger. Zwischen der Materialbahn und dem Analysator oder vor der Materialbahn kann ein $\lambda/4$-Blättchen geschaltet sein, das um seine optische Achse drehbar ist. Auf diese Weise kann durch geeignete Verdrehung des $\lambda/4$-Blättches die durch eine doppelbrechende Materialbahn erzeugte Phasenverschiebung wieder rückgängig gemacht werden, so daß die fehlerfreie Materialbahn dunkel, die Fehler, wie Risse und Löcher, in der Materialbahn jedoch hell erscheinen. Die Beobachtungseinrichtung bzw. der Fotoempfänger liefert nur ein Intensitätssignal zwischen hell und dunkel, jedoch erfolgt keine Auswertung der Intensitätsverteilung dieses Signals und somit auch keine Intensitätsanalyse.

Bei der Herstellung von Filmen aus thermoplastischen Materialien wird das Polymergranulat mittels Extruder und Breitschlitzdüse zu einem Schmelzefilm geformt. Dieser erstarrt beim Kontakt mit Kühlwalzen zu einem Vorfilm, der dann mittels Streckaggregaten stufenweise oder simultan verstreckt wird. Dabei kommt es zu einer Orientierung der Molekülketten im Folienmaterial, die im wesentlichen durch den Streckprozeß hervorgerufen wird. Der Streckprozeß erfolgt zunächst in oder quer zur Maschinenrichtung (Längs- bzw. Querstreckung) und anschließend daran quer oder in Maschinenrichtung (Quer- bzw. Längsstreckung). Die Querstreckung wird im allgemeinen in einem Rahmen durchgeführt. Nach Beendigung der Streckung wird die Folienbahn einer Temperaturbehandlung unterzogen, durch die es zu einer Wärmefixierung der ausgerichteten Molekülketten in der Folie und somit zu einer Beibehaltung der Gestalt des Folienmaterials kommt. Durch die Fixierung wird eine teilkristalline und vorzugsweise biaxial orientierte Folie erhalten.

Die Orientierung innerhalb der Folie kann durch das Indexellipsoid (Indikatrix), das durch die Brechungsindizes $n_1$, $n_2$ und $n_3$ aufgespannt wird, beschrieben werden. Entsprechend den Orientierungen der Molekülketten in der Folie resultieren in drei aufeinander senkrechten Achsenrichtungen unterschiedliche Brechungsindizes. Dabei soll der zur Maschinenrichtung parallel liegende Brechungsindex mit $n_1$, der quer dazu in der Folienebene liegende mit $n_2$ und der in normaler Richtung senkrecht dazu stehende mit $n_3$ bezeichnet werden. Wird eine biaxial orientierte Folie in eine Polarisationsanordnung eingebracht, so liefert das polychrome bzw. weiße Licht einer Lichtquelle nach dem Durchgang durch die Polarisationsanordnung entsprechend der Dicke und Orientierung der Molekülketten der Folienbahn eine charakteristische Interferenzfarbe und Intensität.

Aus der DE-PS 23 38 305 ist ein Verfahren zum Ermitteln der linearen Doppelbrechung eines optisch aktiven Materials bekannt, bei dem das Material mit linear polarisiertem Licht durchstrahlt und das austretende Licht in einer zur Polarisationsebene des einfallenden Lichts senkrechten Polarisationsebene erfaßt wird, wobei zumindest eine Wellenlänge ermittelt wird, bei der das erfaßte Licht ausgelöscht wird. Die dazu verwendete Meßeinrichtung umfaßt eine Lichtquelle, deren Strahl einen Polarisator durchstrahlt, in dem die erforderliche linear polarisierte Welle gebildet wird, welche die zu messende Folie durchdringt und in einen Analysator gelangt und von dort aus in ein Detektorsystem. Das Detektorsystem kann als Prisma bzw. Gitter oder als optischer Vielkanal-Analysator mit einer Vielzahl von Detektoren ausgebildet sein. Die Lichtquelle sendet monochromatisches oder weißes Licht aus.

Aus der DE-OS 31 06 818 ist ein Verfahren zur kontinuierlichen Bestimmung mehrachsiger Orientierungszustände von verstrecken Folien oder Platten über ihre Hauptdoppelbrechungswerte bekannt, bei dem drei Laserstrahlengänge, erzeugt durch drei Laser oder durch Aufteilung eines Laserstrahls in drei Teilstrahlen, verwendet werden, von denen der eine Folie senkrecht und die beiden anderen sie so geneigt durchlaufen, daß die Neigungsebenen senkrecht auf der Folienebene stehen und die beiden Orientierungshauptrichtungen enthalten. Die Phasendifferenzen der Laserstrahl-Intensitäten werden nach Durchlaufen der Folie, eines $\lambda/4$-Plättchens und eines rotierenden Analysators fortlaufend gemessen. Aus den drei Phasendifferenzen werden unter Berücksichtigung der beiden Neigungswinkel der geneigten Laserstrahlen und der auf andere Weise gemessenen Foliendicke die drei Hauptdoppelbrechungswerte der Folie laufend bestimmt. Die Meßvorrichtung umfaßt drei Laser, die durch eine geeignete Linsen- oder Spiegelanordnung nach dem Durchstrahlen der Folie parallel gerichtet werden. Der Lichtstrahl des einen Lasers trifft senkrecht auf die Folienebene, während die Lichtstrahlen der beiden übrigen Laser unter einem Winkel $\Phi$ zur Foliennormalen auf die Folie auftreffen, wobei der Lichtstrahl des einen Lasers in einer Ebene verläuft, die die Foliennormale und die Hauptreckrichtung der Folie enthält, während der Lichtstrahl des anderen Lasers in einer Ebene liegt, die durch die Foliennormale und Transversalreckrichtung der Folie festgelegt ist. Durch die optische Anisotropie der verstreckten Folie werden die von den Lasern ausgehenden, zunächst linear polarisierten Lichtstrahlen elliptisch polarisiert. Ein $\lambda$/4-Plättchen unterhalb der Folie wandelt die elliptische Polarisation der drei Laserstrahlen in eine lineare Polarisation um. Ein rotierendes Polarisationsfilter unterhalb des $\lambda$/4-Plättchens bewirkt eine Auslöschung der Strahlen, wenn ihre Polarisationsrichtungen senkrecht auf die Polarisationsrichtung des Polarisationsfilters stehen. Die Intensitäten der Laserstrahlen werden durch fotoempfindliche Detektoren in periodische elektrische Signale umgewandelt, die gegeneinander phasenverschoben sind. Diese Phasenverschiebungen können mit Hilfe von zwei Phasenmetern bestimmt werden, wobei die dritte Phasenverschiebung die beiden anderen zu 0° ergänzt. Aus den gemessenen Phasenverschiebungen lassen sich die Doppelbrechungswerte in einem Rechner ermitteln und als Meßgrößen für die biaxiale Folienorientierung direkt zur Steuerung der Folienreckanlage verwenden.

Diese bekannte Meßvorrichtung ist apparativ durch den Einsatz von drei Lasern bzw. eines optischen Systems zum Aufteilen eines einzigen Laserstrahls in drei Teilstrahlen aufwendig.

Weist die Folie Gebiete mit anderer Orientierung der Molekülketten in oder quer zur Maschinenrichtung oder Dickstellen gegenüber der Umgebung auf, so ändern sich $n_1$ oder $n_2$ oder die Foliendicke d, und daraus resultiert ein anderer Gangunterschied $\Gamma = (n_1-n_2) \cdot d$ in diesen Gebieten. Damit verbunden ist eine Änderung der Interferenzfarbe und der Intensität.

Gebiete geringerer oder höherer Orientierung in der Folie können als Folge von örtlich begrenzten Dick- oder Dünnstellen im Vorfilm entstehen. Während des Verstreckungsprozesses werden diese Gebiete wesentlich geringer bzw. stärker deformiert. Haben die Dick- bzw. Dünnstellen im Vorfilm die Form eines Streifens von einigen mm Breite und bis zu mehreren m Länge, so hat nach dem Verstreckprozeß auch die Folie streifenförmige Gebiete geringerer bzw. höherer Orientierung von einigen mm Breite und mehreren m Länge. Mit der Orientierung korrelieren die mechanischen Eigenschaften (E-Modul, $\sigma_5$-Wert) der Folie. Streifen mit geringerer bzw. höherer Orientierung weisen daher auch niedrigere bzw. größere mechanische Eigenschaften auf. Das Auftreten von solchen Streifen führt somit zu einer Qualitätsminderung der Folie, die rechtzeitig erkannt werden muß.

Aufgabe der Erfindung ist es, ein Verfahren und eine Vorrichtung zu schaffen, die es ermöglichen, die Dicken- und/oder Orientierungsänderungen einer optischaktiven Materialbahn in bestimmten Gebieten gegenüber der umgebenden Materialbahn kontinuierlich zu erfassen und diese Änderungen dem Materialbahnort eindeutig zuordnen zu können.

Diese Aufgabe wird erfindungsgemäß in der Weise gelöst, daß die Intensitätsverteilung des polychromatischen Lichts, das die durchstrahlte Materialbahnfläche auf einem lichtempfindlichen Detektor bildmäßig abbildet, einer Intensitätsanalyse zur Bestimmung von Fehler anzeigenden Dicken- und/oder Orientierungsänderungen in der Materialbahn derart unterzogen wird, daß die von dem Detektor zu elektrischen Signalen verarbeiteten optischen Signale mit einem vorwählbaren und während der Analyse veränderlichen Schwellwert verglichen werden, daß das Unter- bzw. Überschreiten des Schwellwertes die Unterscheidung zwischen unveränderter und dicken- und/oder orientierungsmäßig veränderter Materialbahn anzeigt und daß die Intensitätsanalyse innerhalb eines vorgegebenen Zeitintervalls mehrfach wiederholt wird. Die vorgegebene Zeitspanne für die mehrfachen Reproduktionen der Intensitätsanalyse beträgt 0,01 msec bis 1 sec. Die Durchstrahlung der Materialbahn und die Bestimmung von Dicken- und/oder Orientierungsänderungen erfolgt kontinuierlich während der laufenden Produktion der Materialbahn. Verfahrensmäßig erfolgt mit den kontinuierlich bestimmten Daten der Intensitätsanalyse die Prozeßsteuerung der Geschwindigkeit, der Erwärmung, der Längs- und Querstreckung der Materialbahn.

Die Vorrichtung zur optischen Fehlerüberwachung einer optisch aktiven, transparenten Materialbahn, bei der zu beiden Seiten der Materialbahn, zueinander gekreuzt, ein Polarisator und ein Analysator im Strahlengang einer Lichtquelle für polychromatisches Licht zu einem Detektor angeordnet sind, zeichnet sich dadurch aus, daß der Detektor an einer Bildanalyse- und Rechnereinheit für eine mehrfach wiederholte Intensitätsanalyse des vom Detektor empfangenen Bildes der Materialbahn angeschlossen ist, daß in der Bildanalyse- und Rechnereinheit eine wahlbare und während der Analyse veränderliche Schwellwerteinstellung für die Intensitätsanalyse vorhanden ist, durch die Fehler anzeigende Dicken- und/oder Orientierungsänderungen in der Materialbahn bestimmt werden und daß das analysierte Bild von der Bildanalyse- und Rechnereinheit einem Monitor zur Abbildung und einer Ausgabeeinheit zum Registrieren eingespeist wird.

Die Weiterbildung der Vorrichtung ergibt sich aus den Merkmalen der Patentansprüche 5 bis 9.

Bei der Vorrichtung wird das Interferenzbild der zwischen zwei gekreuzten Polarisatoren hindurchgeführten, vorzugsweise biaxial gestreckten Materialbahn, z.B. eine Folienbahn, über den lichtempfindlichen Detektor der Rechnereinheit zugeführt, die mit Hilfe des integrierten Bildanalysesystems eine Auswertung der Helligkeitswerte durchführt. Außerdem werden der Rechnereinheit Daten über die Breite und die Laufgeschwindigkeit der Folie zugeführt, so daß eine örtliche Zuordnung der Streifen auf der Folienbahn möglich ist und diese von der Ausgabeeinheit registriert und aufgezeichnet werden können.

Die Erzeugung des Interferenzbildes und die Bestimmung des Ortes von Streifen erfolgt während der laufenden Herstellung der Folienbahn, d.h. die Erfindung ermöglicht eine on-line-Kontrolle der biaxial gestreckten Folienbahn.

Das die Folienbahn durchstrahlende polychromatische (weiße), polarisierte Licht wird in zwei zueinander senkrecht stehende polarisierte Wellen zerlegt, die sich nach dem Durchtritt durch die Folienbahn im allgemeinen zu einer elliptisch polarisierten Welle vereinigen, von der der parallel zur Analysatorrichtung polarisierte Anteil durch den Analysator durchgelassen und dessen Intensität in der Weise gemessen wird, daß das Bild hinter dem Analysator als Rasterbild von dem Detektor, z.B. einer Videokamera, aufgenommen wird und der Kontrast rechnerisch zur Bestimmung von solchen Gebieten gleicher Intensität ausgewertet wird, die sich deutlich von der Intensität des streifenfreien Bereichs der Folienbahn unterscheiden.

Die Vorrichtung besteht aus der Lichtquelle, der Abbildungseinrichtung zum Durchstrahlen der Folie und dem lichtempfindlichen Detektor zur Intensitätsmessung des die Folienbahn durchsetzenden Lichtes. Die Streuscheibe dient zur Vergleichmäßigung des Lichtes und der Filter zur Kontrasterhöhung. Der Polarisator ist beispielsweise eine dichroitische Folie und der Analysator ein Polarisationsprisma aus doppelbrechenden Kristallen oder gleichfalls eine dichroitische Folie in Gestalt eines Polarisationsfilters. Der lichtempfindliche Detektor ist eine Videokamera, die ein Rasterbild liefert, und die Rechnereinheit ermittelt Flächen gleicher Lichtintensität und somit die Kontur für die Kontrastauswertung des Rasterbildes. Liegt die Lichtintensität in Gebieten über einem gewissen vorgegebenen Schwellwert, so werden diese Gebiete als Streifen registriert und über die Ausgabeeinheit so ausgegeben, daß eine örtliche Zuordnung auf der Folienbahn möglich ist.

Mit der Erfindung wird der Vorteil erzielt, daß Streifen, also Gebiete geringerer oder höherer Orientierung bzw. Dicke, während des laufenden Herstellungsprozesses erkannt werden.

Im folgenden wird die Erfindung anhand der Zeichnungen näher erläutert.

Es zeigen:
Figuren 1a und 1b
schematisch die Lage des Indexellipsoides des Brechungsindices in unterschiedlich biaxial orientierten Folien;
Figuren 2a und 2b
eine schematische Seitenansicht und eine Draufsicht der Vorrichtung nach der Erfindung;
Fig. 3
ein optisches Interferenzbild einer Polyethylenterephthalat (PET)-Folie mit Streifen;
Fig. 4a bis 4c
mit einer Videokamera aufgenommene Monitorbilder einer Polyethylenterephthalat(PET)-Folie mit Streifen, die in der Bildanalyse- und Rechnereinheit bei verschiedenen Schwellwerteinstellungen umgewandelt wurden;
Fig. 5
schematische Diagramme der Lichtintensität des Bildes einer nicht bewegten Polyethylenterephthalat(PET)-Folie mit Streifen, bei unterschiedlichen Schwellwerteinstellungen und zu verschiedenen Zeiten aufgenommen;
Fig. 6
ein schematisches Diagramm eines Ausdrucks von der Ausgabeeinheit; und
Fig. 7
den schematischen Aufbau einer Vorrichtung zur Streifenbestimmung von orientierten Polyethylenfolien im on-line-Verfahren.

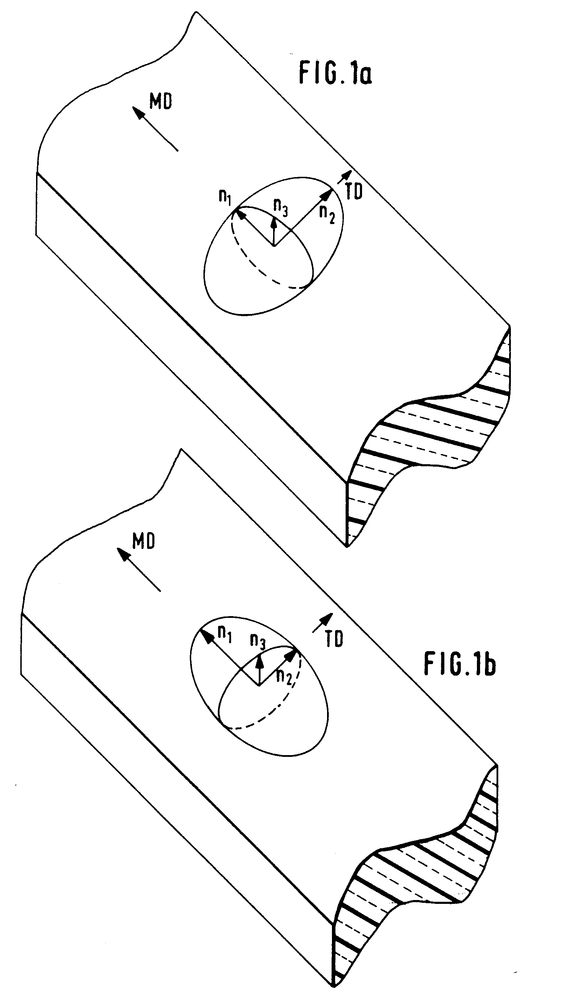

In Fig. 1a und 1b sind anhand des Indexellipsoids die in der Praxis angestrebten idealen Anisotropiezustände einer biaxial gestreckten Folienbahn für einen Längs-/Querstreck- und einen Quer-/Längsstreck-Prozeß dargestellt. Wie Fig. 1a zeigt, treten im allgemeinen, bedingt durch die Verfahrensparameter, unterschiedliche Orientierungszustände in Längs- bzw. Maschinenrichtung MD und in Querrichtung TD auf. Bei einem Herstellungsprozeß, bei dem die Folie erst längs- und dann quergestreckt wird, stehen die Maschinenrichtung MD und die Hauptorientierungsrichtung mit dem größten Brechungsindex $n_2$ in der Folienmitte senkrecht zueinander, wie Fig. 1a zeigt. Bei einem Herstellungsverfahren, bei dem die Folienbahn zunächst quer- und dann längsgestreckt wird, sind die Maschinenrichtung MD und die Hauptorientierungsrichtung des größten Brechungsindex $n_1$ zueinander parallel ausgerichtet.

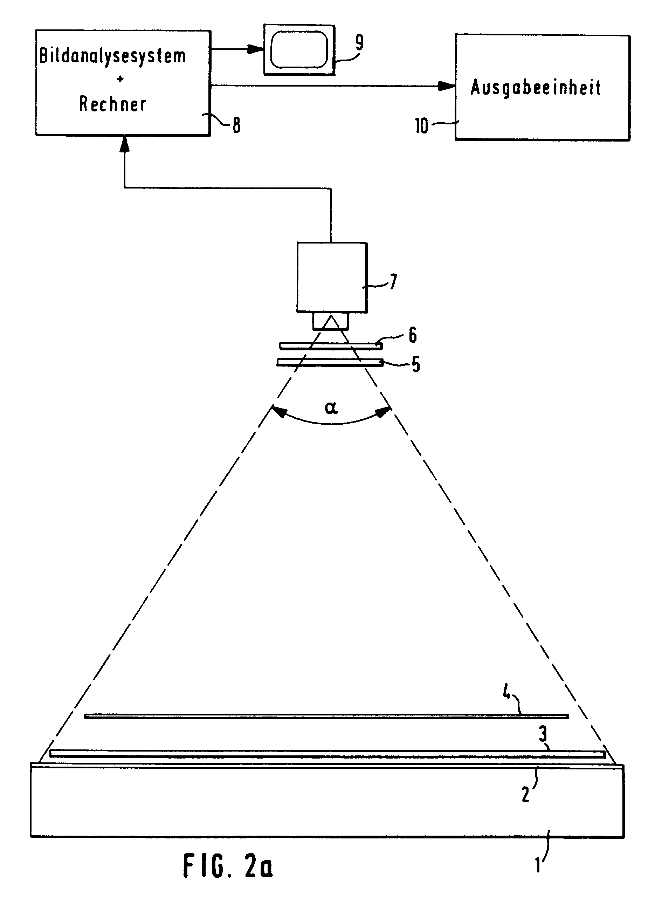

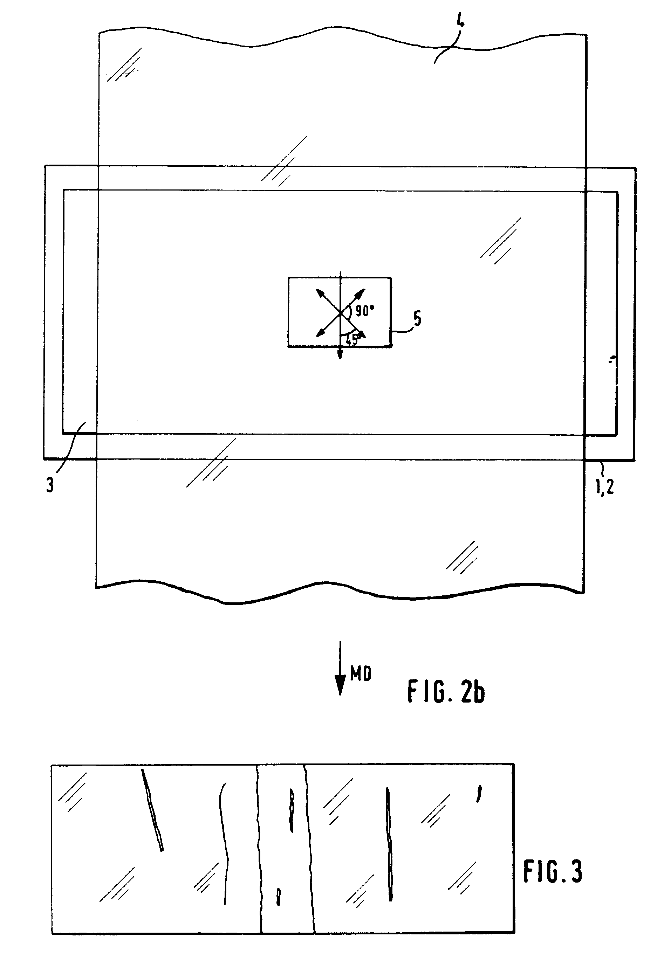

Anhand der Fig. 2a und 2b wird der grundsätzliche Aufbau einer Meßvorrichtung zur Streifenerkennung einer laufenden optisch aktiven Materialbahn 4, z.B. einer Folienbahn aus Polyethylenterephthalat beschrieben.

Die aus einer polychromatischen, d.h. einer weißen Lichtquelle 1, einem Polarisator 3, einem Analysator 5, dessen Polarisationsebene um 90° zu der des Polarisators 3 gedreht ist, und einem fotoempfindlichen Detektor 7 bestehende Polarisationsanordnung ist zu beiden Seiten einer Materialbahn 4 angeordnet. Die Maschinenrichtung MD und damit die Richtung des Brechungsindex $n_1$ mit der Polarisationsebene des Polarisators 3 als auch des Analysators 5 bildet jeweils einen Winkel von 45°, wie Fig. 2b zeigt. Es wird dann das in Richtung des Polarisators 3 linear polarisierte Licht in der Materialbahn 4 in zwei gleich starke, in den Richtungen der Brechungsindizes $n_1$ und $n_2$ polarisierte Wellen zerlegt, welche die Materialbahn 4 mit unterschiedlicher Ausbreitungsgeschwindigkeit durchlaufen und somit zeitlich versetzt aus der Folienbahn austreten, was einen Gangunterschied $\Gamma = (n_1-n_2)\cdot d$ zur Folge hat, mit der Foliendicke d. Die beiden Lichtwellen vereinigen sich hinter der Folienbahn zu einer im allgemeinen elliptisch polarisierten Welle, von der nur der Anteil durch den Analysator 5 durchgelassen wird, dessen Schwingungsrichtung parallel zur Richtung der Polarisationsebene des Analysators 5 steht.

Die Strahlen der polychromen Lichtquelle 1 werden durch eine Streuscheibe 2 vergleichmäßigt, durch den Polarisator 3 linear derart polarisiert, daß die Richtung der Polarisationsebene zur Maschinenrichtung MD den Winkel von 45° aufweist. Das polarisierte Licht wird in der Folienbahn 4 in die zwei senkrecht zueinander, parallel zu den Richtungen der Brechungsindizes $n_1$ und $n_2$ liegende Strahlen aufgespalten. Der Anteil des elliptisch polarisierten Lichtes, dessen Schwingungsrichtung parallel zur Polarisationsebene des Analysators 5 verläuft, die um 90° gegenüber der Polarisationsebene des Polarisators gedreht ist, wird durch diesen hindurchgelassen, tritt durch einen Filter 6 zur Kontrasterhöhung und gelangt auf den lichtempfindlichen Detektor 7, z.B. eine Videokamera mit einer zweidimensionalen Diodenmatrix als lichtempfindliches Element. Von einer speziellen Bildanalyse- und Rechnereinheit 8 wird das optisch sichtbare Bild nach seiner punktuellen Helligkeit ausgewertet. In der Bildanalyse- und Rechnereinheit 8 erfolgt mit Hilfe einer wählbaren Schwellwerteinstellung für die elektrischen Signale, die der lichtempfindliche Detektor 7 auf Grund der empfangenen optischen Signale liefert, eine Intensitätsanalyse und nachfolgend eine Abbildung des erhaltenen Binärbildes auf dem Bildschirm eines Monitors 9, der mit der Bildanalyse- und Rechnereinheit 8 verbunden ist. Die Ausgangsdaten der Einheit 8 werden des weiteren in eine Ausgabeeinheit 10 eingespeist, in dieser registriert und aufgezeichnet. Diese Ausgabeeinheit 10 kann beispielsweise ein Punktdrucker, ein x-y-Schreiber oder dergleichen Aufzeichnungseinheit sein. Die Ausgangsdaten werden ferner für die kontinuierliche Prozeßsteuerung der Geschwindigkeit, der Erwärmung, der Längs- und Querstreckung und sonstiger Verfahrensparameter bei der Herstellung der Folienbahn 4 verwendet.

Ein optisches Interferenzbild einer PET-Folie mit einem Streifen ist schematisch in Fig. 3 dargestellt.

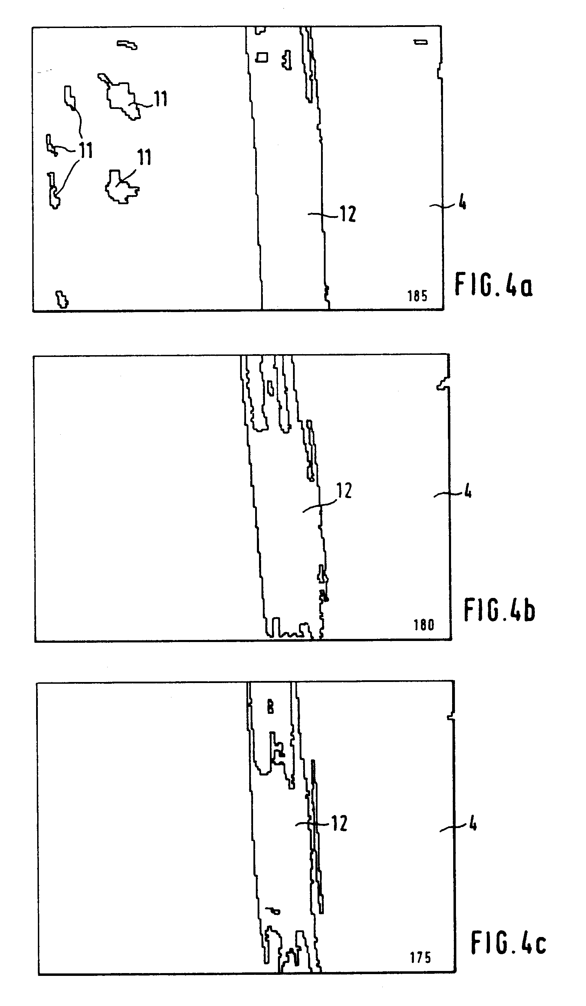

Die Figuren 4a bis 4c zeigen mit der Bildanalyse- und Rechnereinheit 8 analysierte Binärbilder von Streifen bei stehender Folienbahn 4. Die Binärbilder wurden mit abnehmender Schwellwerthöhe, d.h. zunehmender Lichtintensität auf dem Monitor 9 abgebildet. Die Diskriminatoreinstellung in der Bildanalyse- und Rechnereinheit 8 wurde bei den Aufzeichnungen von einem Skalenwert 185 in Schritten von fünf Skalenteilen auf einen Skalenwert 175 abgesenkt. Es ist zu erkennen, daß der Streifen 12 in den Fig. 4b und 4c deutlich von den einzelnen Einschlüssen 11, die andere Orientierungen als die umgebende Folienbahn 4 besitzen, in Fig. 4a abgetrennt werden kann.

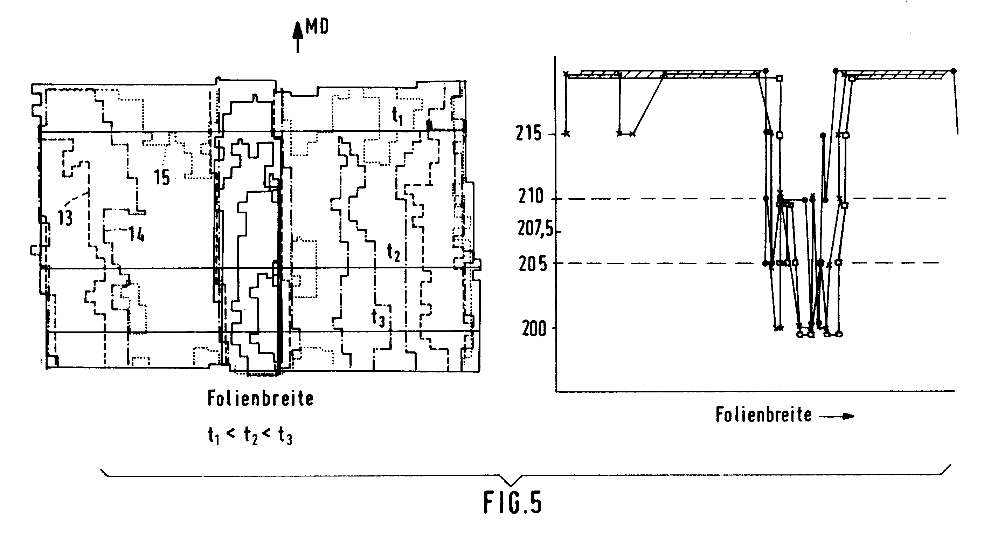

Im linken Bild in Fig. 5 sind bei stehender Folienbahn 4 auf dem Bildschirm des Monitors 9 Binärbilder eines Streifens bei verschiedenen Schwellwerthöhen bzw. -einstellungen abgebildet, wobei die gestrichelte Linie 13 beispielsweise einer Schwellwerteinstellung von 205, die strichpunktierte Linie 14 einer Einstellung von 210 und die punktierte Linie 15 einer Schwellwerteinstellung von 215 in der Bildanalyse- und Rechnereinheit 8 entspricht. Des weiteren sind senkrecht zur Lauf- bzw. Maschinenrichtung MD Zeitlinien $t_1$, $t_2$, $t_3$ eingetragen, wobei für die entsprechenden Zeiten gilt, daß $t_1$ kleiner als $t_2$ und $t_2$ kleiner als $t_3$ ist. Bei einer bestimmten Bahngeschwindigkeit der Folienbahn 4 kann das Zeitintervall $t_2-t_1$ bzw. $t_3-t_2$ von 0,01 msec bis 1,0 sec, evt. auch bis 2,0 sec reichen.

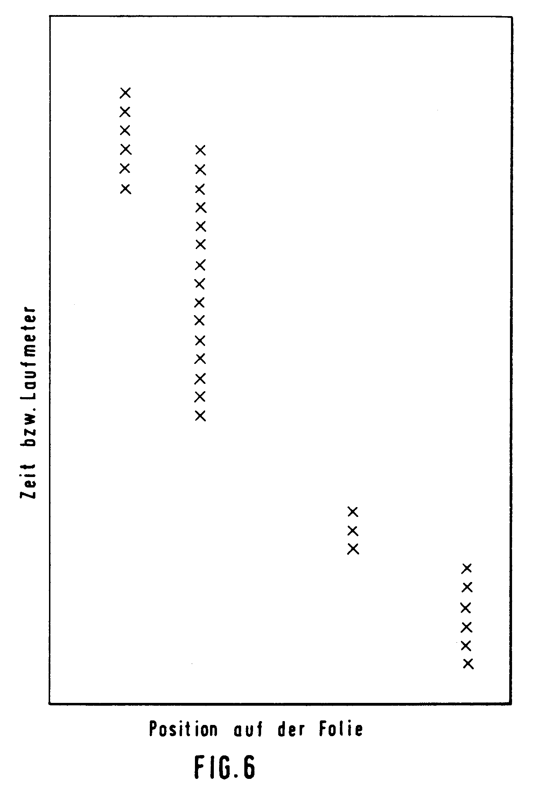

Im rechten Bild in Fig. 5 ist der Intensitätsverlauf entlang der Zeitlinien $t_1$, $t_2$, $t_3$ in den Binärbildern mit unterschiedlichen Schwellwerten senkrecht zur Lauf- und damit zur Streifenrichtung dargestellt. Wie sich zeigt, zeichnet sich der Streifen durch eine höhere Intensität, d.h. einem geringeren Schwellwert gegenüber der umgebenden Folienbahn 4 aus. Die entlang der Zeitlinie $t_1$ im rechten Bild der Fig. 5 durch Kreuze angedeuteten Einschlüsse 11 können aus den Binärbildern dadurch ausgeschlossen werden, daß ein geeigneter Schwellwert vorgegeben wird und dieser über eine bestimmte vorwählbare Zeitspanne als Funktion des Ortes beobachtet wird. Wird dieser Schwellwert während der vorgegebenen Zeitspanne stets am gleichen Ort überschritten, so handelt es sich um einen Streifen, anderenfalls um Einschlüsse. Im letzteren Fall wird der Schwellwert solange abgesenkt, bis diese Einschlüsse im Binärbild nicht mehr aufscheinen. Wie aus dem rechten Bild der Fig. 5 zu ersehen ist, sind bei einem Schwellwert 215 die Einschlüsse 11 in Fig. 4a und der Streifen entlang der Zeitlinie $t_1$, voneinander deutlich getrennt, zu erkennen. Bei einer Schwellwerteinstellung 210 sind die Einschlüsse aus den Binärbildern eliminiert. Bei einer Schwellwerteinstellung 205 läßt sich entlang der Zeitlinie $t_2$ schon die Feinstruktur der Folienbahn 4 erkennen, so daß die Unterscheidung zwischen dem Streifen und der umgebenden Folienbahn 4 schwierig wird. In diesem Fall ist es angebracht, die Schwellwerteinstellung auf einen Wert größer als 205 und kleiner 215 einzustellen, beispielsweise auf einen Wert 210 oder 207,5. In Fig. 6 sind die Stellen erhöhter Lichtintensität gegenüber der umgebenden Folienbahn durch ein Kreuz markiert. In Ordinatenrichtung sind die Zeit bzw. die von der Folienbahn 4 zurückgelegten Laufmeter und in Abszissenrichtung die jeweilige Position auf der Folienbahn 4 eingetragen.

Um Störeinflüsse infolge geringer Intensitätsschwankungen des Untergrunds, der den streifenfreien Folienbereichen entspricht, besser unterdrücken zu können, wird zur Erhöhung des Kontrastes der in Fig. 2a gezeigte Filter 6 verwendet.

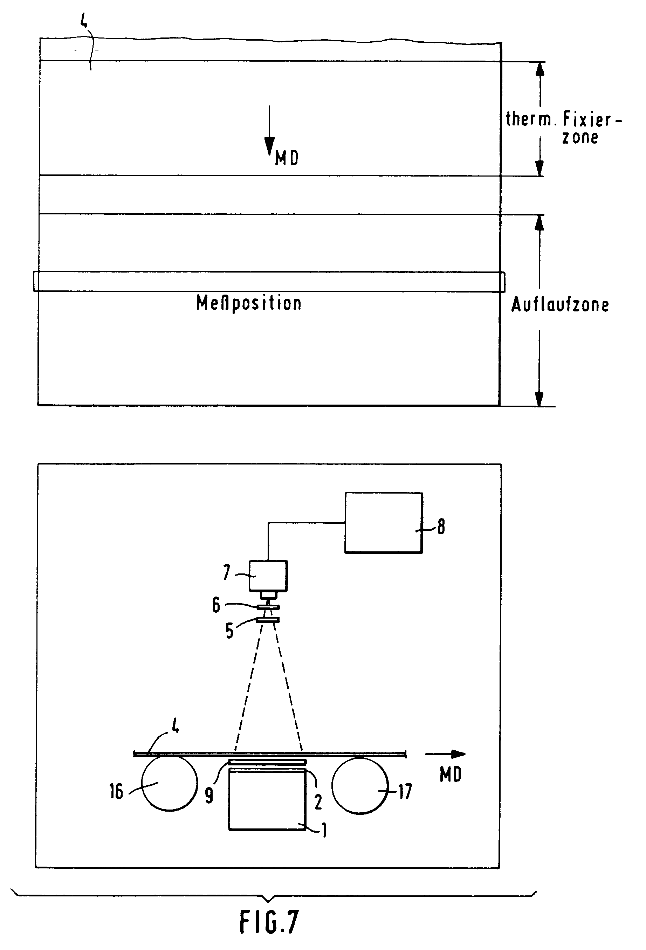

Fig. 7 zeigt in schematischer Darstellung in Draufsicht die Meßposition des Detektors 7 bzw. der Videokamera in der Auflaufzone zur Aufwicklung der Folienbahn 4. Die Auflaufzone ist in Lauf- bzw. Maschinenrichtung MD der thermischen Fixierzone nachgeschaltet. Die Meßposition bzw. das Bildfeld der Videokamera erstreckt sich über die Breite der Folienbahn 4 hinaus. Dadurch ist es möglich, den Ort des Streifens über die Folienbreite genau anzugeben, da es an den Rändern der Folienbahn 4 zu einer Auslöschung des elliptisch polarisierten Lichtes kommt. Hierzu wird auch auf Fig. 2a verwiesen, aus der gleichfalls zu ersehen ist, daß das Bildfeld der Videokamera größer als die Breite der Folienbahn 4 ist, da die dort gestrichelten Schenkel des Öffnungswinkels des Objektivs der Videokamera an den Rändern der Folienbahn 4 in einem bestimmten Abstand vorbeigehen. Da der Polarisator 3 und der dazu gekreuzte Analysator 5 mindestens das Bildfeld der Videokamera abdecken, ergeben sich somit links und rechts von den Rändern der Folienbahn 4 Gebiete völliger Dunkelheit infolge der gekreuzten Stellung von Polarisator 3 und Analysator 5, d.h. beim Überqueren der Ränder der Folienbahn 4 kommt es zu einem Intensitätssprung in der Lichtintensität infolge der auftretenden Auslöschung. Dadurch ist eine genaue Kontrolle der Breite der Folienbahn 4 sowie eine exakte Ortsbestimmung der innerhalb der Folienbahn 4 auftretenden Streifen möglich.

Im unteren Teil der Fig. 7 ist schematisch der Ort des Anbaus der Polarisationsanordnung und Meßvorrichtung zur kontinuierlichen Streifenerkennung an einer Produktionsanlage zwischen Walzen 16 und 17 der Auflaufzone vor der Aufwickelung der gestreckten Folienbahn 4 gezeigt.

**Patentansprüche**

1.   Verfahren zur optischen Fehlerüberwachung einer optisch aktiven, transparenten Materialbahn, bei dem die Intensität von polychromatischen Licht nach dem Durchstrahlen der zwischen gekreuzten Polarisatoren hindurchbewegten Materialbahn gemessen wird, dadurch gekennzeichnet, daß die Intensitätsverteilung des Lichts, das die durchstrahle Materialbahnfläche auf einem lichtempfindlichen Detektor bildmäßig abbildet, einer Intensitätsanalyse zur Bestimmung von Fehler anzeigenden Dicken- und/oder Orientierungsänderungen in der Materialbahn derart unterzogen wird, daß die von dem Detektor zu elektrischen Signalen verarbeiteten optischen Signale mit einem vorwählbaren und während der Analyse veränderlichen Schwellwert verglichen werden, daß das Unter- bzw. Überschreiten des Schwellwertes die Unterscheidung zwischen unveränderter und dicken- und/oder orientierungsmäßig veränderter Materialbahn anzeigt und daß die Intensitätsanalyse innerhalb eines vorgegebenen Zeitintervalls mehrfach wiederholt wird.

2.   Verfahren nach Anspruch 1, dadurch gekennzeichnet, daß die von dem linear polarisierten Licht auf den lichtempfindlichen Detektor bildmäßig abgebildete Fläche der Materialbahn und somit die Breite und Laufmeter der Materialbahn registriert und aufgezeichnet werden.

3.   Verfahren nach den Ansprüchen 1 und 2, dadurch gekennzeichnet, daß mit den kontinuierlich bestimmten Daten der Intensitätsanalyse die Prozeßsteuerung für die Herstellung von multiaxial orientierten Folien, in bezug auf die Geschwindigkeit, Erwärmung und verschiedenen Streckstufen der Materialbahn, erfolgt.

4.   Vorrichtung zur optischen Fehlerüberwachung einer optisch aktiven, transparenten Materialbahn (4), bei der zu beiden Seiten der Materialbahn, zueinander gekreuzt, ein Polarisator (3) und ein Analysator (5) im Strahlengang einer Lichtquelle (1) für polychromatisches licht zu einem Detektor (7) angeordnet sind, dadurch gekennzeichnet, daß der Detektor (7) an einer Bildanalyse- und Rechnereinheit (8) für eine mehrfach wiederholte Intensitätsanalyse des vom Detektor empfangenen Bildes der Materialbahn (4) angeschlossen ist, daß in der Bildanalyse- und Rechnereinheit (8) eine wählbare und während der Analyse veränderliche Schwellwerteinstellung für die Intensitätsanalyse vorhanden ist, durch die Fehler anzeigende Dicken- und/oder Orientierungsänderungen in der Materialbahn bestimmt werden, und daß das analysierte Bild von der Bildanalyse- und Rechnereinheit (8) einem Monitor (9) zur Abbildung und einer Ausgabeeinheit (10) zum Registrieren eingespeist wird.

5. Vorrichtung nach Anspruch 4, dadurch gekennzeichnet, daß der Polarisator (3) und Analysator (5) im Strahlengang der Lichtquelle (1) so angeordnet sind, daß ihre jeweiligen Polarisationsebenen vorzugsweise einen Winkel von 45° zur Laufrichtung MD der Materialbahn aufweisen und daß auf dem Schirm des Monitors (9) das Bild der Materialbahn (4) vorzugsweise als Digitalbild entsprechend der punktuellen Helligkeit in Abhängigkeit der x-y Lage der Materialbahn (4) abgebildet ist und die Ausgabeeinheit (10) Streifen, die Dicken- und/oder Orientierungsänderungen der Materialbahn (4) enthalten, als Funktion des Ortes, somit der Materialbahnbreite und der Laufmeter, registriert und aufzeichnet.

6. Vorrichtung nach Anspruch 4, dadurch gekennzeichnet, daß eine Streuscheibe (2) den Lichtkasten der Lichtquelle (1) abschließt.

7. Vorrichtung nach Anspruch 6, dadurch gekennzeichnet, daß die Lichtquelle (1), die Streuscheibe (2) und der Polarisator (3) auf der einen Seite der Materialbahn (4) und der Analysator (5), ein Filter (6) und der lichtempfindliche Detektor (7) auf der anderen Seite der Materialbahn (4) angeordnet sind.

8. Vorrichtung nach Anspruch 7, dadurch gekennzeichnet, daß der Detektor (7) eine Videokamera ist, die eine zweidimensionale Diodenmatrix als lichtempfindliches Element aufweist.

9. Vorrichtung nach Anspruch 8, dadurch gekennzeichnet, daß der Polarisator (3) und der Analysator (5) vorzugsweise um 90° zueinander gekreuzt sind und daß die Laufrichtung MD der Materialbahn (4) mit den Polarisationsebenen des Polarisators (3) und des Analysators (5) einen Winkel von vorzugsweise 45° einschließt.

## Claims

1. A method for the optical fault control of an optically active, transparent web of material, in which method the intensity of polychromatic light is measured after transillumination of the web of material which is being passed between crossed polarizers, characterized in that the intensity distribution of the light imagewise reproducing the transilluminated surface of the web of material on a light-sensitive detector, is subjected to an intensity analysis for being able to detect variations in thickness and/or orientation of the web of material, which variations indicate faults, said analysis being performed such that the optical signals converted into electrical signals by the detector are compared to a pre-selectable threshold value which can be varied during the analysis, that upper or lower deviations from the threshold value indicate the difference between the unchanged areas of the web of material and those areas of the web of material which changed in respect of thickness and/or orientation, and that the intensity analysis is repeated several times within a predetermined time span.

2. The method as claimed in claim 1, characterized in that the surface of the web of material imagewise reproduced onto the photosensitive detector by the linear polarized light and thus the width and running meters of the web of material are measured and recorded.

3. The method as claimed in claims 1 and 2, characterized in that the process control for the production of multiaxially oriented films, in respect of speed, heating rate and individual stretching stages of the web of material, is performed using the continuously measured data of the intensity analysis.

4. A device for the optical fault control of an optically active, transparent web of material (4), in which a polarizer (3) and an analyser (5), which are crossed with respect to one another, are provided on either side of the web of material in the path of the rays from a light source (1) for polychromatic light to a detector (7), characterized in that the detector (7) is connected to an image analysis and computing unit (8) for a multiply repeated intensity analysis of the image of the web of material (4) received by the detector, that a preselectable adjustment of the threshold value for the intensity analysis is possible, which value can be varied during the analysis and makes it possible to determine changes in thickness and/or orientation of the web of material, which indicate faults, and in that the analyzed image is fed from the image analysis and computing unit (8) to a monitor (9) for reproduction and to an output unit (10) for recording.

5. The device as claimed in claim 4, characterized in that the polarizer (3) and analyzer (5) are arranged in the ray path of the light source (1) in such a fashion that their respective polarization planes preferably have an angle of 45° to the direction of movement MD of the web of material and that the image of the web of material (4) is reproduced on the screen of the monitor (9), preferably as a digital image corresponding to the pointwise brightness with respect to the x/y position of the web of material (4), and the output unit (10) registers and records streaks, which contain changes in thickness and/or orientation of the web of material (4), as a function of the location, and thus also of the width of the web of material and the running meters.

6. The device as claimed in claim 4, characterized in that the diffuser screen (2) terminates the light box of the light source (1).

7. The device as claimed in claim 6, characterized in that the light source (1), the diffuser screen (2) and the polarizer (3) are arranged on one side of the web of material (4), and the analyzer (5), a filter (6) and the light-sensitive detector (7) are arranged on the other side of the strip of material (4).

8. The device as claimed in claim 7, characterized in that the detector (7) is a video camera which incorporates a two-dimensional diode matrix as light-sensitive element.

9. The device as claimed in claim 8, characterized in that the polarizer (3) and the analyzer (5) are preferably crossed at 90° to one another and wherein the direction of movement MD of the strip of material (4) encloses an angle of preferably 45° with the polarization planes of the polarizer (3) and of the analyzer (5).

**Revendications**

1. Procédé pour contrôler optiquement la présence de défauts dans une bande de matériau transparent actif du point de vue optique, selon lequel on mesure l'intensité d'une lumière polychromatique après qu'elle ait traversé la bande de matériau qui se déplace entre des polariseurs croisés, caractérisé en ce qu'on soumet la distribution de l'intensité de la lumière, qui forme l'image de la surface traversée de la bande de matériau sur un détecteur photosensible, à une analyse d'intensité afin de déterminer des variations d'épaisseur et/ou d'orientation indiquant des défauts, de sorte que les signaux optiques traités par le détecteur pour former des signaux électriques sont comparés à une valeur de seuil présélectionnée, qui est variable pendant l'analyse, que le dépassement par valeurs inférieures ou supérieures de la valeur de seuil indique la différenciation entre une bande de matériau dont l'épaisseur et/ou l'orientation est inchangée et une bande de matériau dont l'épaisseur et/ou l'orientation est modifiée, et qu'on répète plusieurs fois l'analyse de l'intensité pendant un intervalle de temps prédéterminé.

2. Procédé selon la revendication 1, caractérisé en ce que la surface de la bande de matériau, dont l'image est formée par la lumière polarisée linéairement sur le détecteur photosensible, et par conséquent la largeur et la distance de déplacement de la bande de matériau sont enregistrées et représentées.

3. Procédé selon les revendications 1 et 2, caractérisé en ce que la commande de processus pour la fabrication de feuilles à orientation multiaxiale s'effectue, en rapport avec la vitesse, l'échauffement et les différents échelons d'étirage de la bande du matériau, avec les données, déterminées en continu, fournies par l'analyse de l'intensité.

4. Dispositif pour contrôler optiquement la présence de défaut d'une bande de matériau transparent (4), active du point de vue optique, dans lequel un polariseur (3) et un analyseur (5) sont disposés des deux côtés de la bande de matériau, en étant croisés l'un par rapport à l'autre, dans le trajet du rayonnement d'une source (1) de lumière polychromatique en direction d'un détecteur (7), caractérisé en ce que le détecteur (7) est raccordé à une unité (8) d'analyse et de calcul d'images pour l'exécution d'une analyse, répétée de façon multiple, de l'intensité de l'image, reçue par le détecteur, de la bande de matériau (4), que dans l'unité (8) d'analyse et le calcul d'images, il est prévu un réglage de la valeur de seuil pour l'analyse de l'intensité, réglage qui peut être sélectionné, et modifiable pendant l'analyse et au moyen duquel des modifications d'épaisseur et/ou d'orientation, indiquant des défauts, dans le matériau de la bande sont déterminées, et que l'image analysée est introduite par l'unité (8) d'analyse et de calcul d'images, dans un moniteur (9) pour l'obtention de l'image et dans une unité de sortie (10) pour l'enregistrement.

5.  Dispositif selon la revendication 4, caractérisé en ce que le polariseur (3) et l'analyseur (5) sont disposés dans le trajet du rayonnement de la source de lumière (1) de telle sorte que leurs plans respectifs de polarisation font de préférence un angle de 45° par rapport à la direction de déplacement MD de la bande de matériau et que l'image de la bande de matériau (4) est formée sur l'écran du moniteur (9) de préférence sous la forme d'une image numérique, conformément à la luminosité ponctuelle en fonction de la position x-y de la bande de matériau (4), et l'unité de sortie (10) enregistre et représente des bandes, qui contiennent des modifications de l'épaisseur et/ou de l'orientation de la bande de matériau (4), en fonction de l'emplacement, c'est-à-dire de la largeur de la bande et de la distance parcourue par la bande.

6.  Dispositif selon la revendication 4, caractérisé en ce qu'un écran diffuseur (2) ferme la boîte à lumière de la source de lumière (1).

7.  Dispositif selon la revendication 6, caractérisé en ce que la source de lumière (1), l'écran diffuseur (2) et le polariseur (3) sont disposés d'un côté de la bande de matériau (4) et que l'analyseur (5), un filtre (6) et le détecteur photosensible (7) sont disposés de l'autre côté de la bande de matériau (4).

8.  Dispositif selon la revendication 7, caractérisé en ce que le détecteur (7) est une caméra vidéo qui possède une matrice bidimensionnelle de diodes en tant qu'élément photosensible.

9.  Dispositif selon la revendication 8, caractérisé en ce que le polariseur (3) et l'analyseur (5) sont croisés réciproquement de préférence à 90° et que la direction de déplacement MD de la bande de matériau (4) fait un angle de préférence égal à 45° avec les plans de polarisation du polariseur (3) et de l'analyseur (5).

FIG.1a

MD

$n_1$ $n_3$ $n_2$ TD

FIG.1b

MD

$n_1$ $n_3$ $n_2$ TD

FIG. 2a

**FIG. 2b**

**FIG.3**

**FIG.4a**

**FIG.4b**

**FIG.4c**

FIG.5

FIG.5

Folienbreite

$t_1 < t_2 < t_3$

MD

215
210
207,5
205
200

14

FIG.6

therm. Fixierzone

MD

Meßposition

Auflaufzone

8

7

6

5

4

16

9

2

1

17

MD

FIG.7